# EUROPÄISCHE PATENTSCHRIFT

(11) **EP 2 010 302 B1**
(45) Veröffentlichungstag und Bekanntmachung des Hinweises auf die Patenterteilung: **10.11.2010**
(21) Anmeldenummer: 06819940.5
(22) Anmeldetag: 12.12.2006
(51) Int. Cl.: B01D 29/13, B01D 46/24

(54) **FILTERELEMENT**
FILTER ELEMENT
ELEMENT DE FILTRAGE

(30) Priorität: 23.12.2005 DE 202005020260 U
(43) Veröffentlichungstag der Anmeldung: 07.01.2009
(73) Patentinhaber: MANN+HUMMEL GmbH, 71638 Ludwigsburg (DE)
(72) Erfinder: SCHWINGHAMMER, Alfons, 84130 Dingolfing (DE); PFLÜGER, Frank, 74343 Sachsenheim (DE)
(86) Internationale Anmeldenummer: PCT/EP2006/069565
(87) Internationale Veröffentlichungsnummer: WO 2007/074050

(56) Entgegenhaltungen:
- DE-A1- 2 048 891
- DE-A1- 19 739 510
- DE-C1- 4 324 388

## Beschreibung

### Technisches Gebiet

Die Erfindung betrifft ein Filterelement nach dem Oberbegriff des Anspruches 1.

### Stand der Technik

Aus der DE 4 324 388 C1 ist eine Filterzelle bekannt, die einen in einem Rahmen angeordneten Filtereinsatz aufweist, wobei die Enden der Filterbahn mittels einer Vergussmasse am Rahmen fixiert sind und wobei zwischen Rahmen und Vergussmasse eine selbstklebende Trennbahn angeordnet ist.

Es sind ferner Filterelemente bekannt, welche über Kunststoffendscheiben und Filtermedien verfügen. Zwischen den Kunststoffendscheiben und dem Filtermedium ist mittels einer PUR-Vergussmasse (Polyurethan-Vergussmasse) eine dichtende Verbindung erzeugt. Bei anderen Ausgestaltungen verfügt das Filterelement zusätzlich über ein Stützrohr aus Kunststoff, welches ebenfalls durch die Vergussmasse mit dem Filtermedium dichtend verbunden ist. Die PUR-Vergussmasse kann sich jedoch durch Einflussfaktoren, wie z.B. Alterung der PUR-Vergussmasse, Temperaturschwankungen oder Vibrationen, von den Kunststoffteilen lösen, was zu Undichtigkeiten führt.

Aufgabe der Erfindung ist es daher, ein Filterelement zu schaffen, welches über eine dauerhaft dichtende Verbindung zwischen den Kunststoffteilen und dem Filtermedium verfügt. Diese Aufgabe wird durch die Merkmale des Anspruches 1 gelöst.

### Offenbarung der Erfindung

Das erfindungsgemäße Filterelement ist zur Reinigung eines Fluids vorgesehen. Das Fluid kann gasförmig oder flüssig sein. Vorzugsweise ist das Filterelement zur Reinigung von Ansaugluft einer Brennkraftmaschine vorgesehen. Hierbei kann das Filterelement als Flachelement oder als ringförmig geschlossenes Filterelement ausgebildet sein. Das Filterelement verfügt zumindest über ein Kunststoffteil und ein Filtermedium, welches zur Abscheidung von Verunreinigungen aus dem Fluidstrom geeignet ist. Hierbei können alle beliebigen im Stand der Technik bekannten Filtermedien verwendet werden. Das Kunststoffteil kann aus einem Duroplast, oder einem Elastomer, oder einem Thermoplast bestehen. An dem Kunststoffteil ist ein Verbindungsteil angeordnet, welches unlösbar mit dem Kunststoffteil verbunden ist. Hierbei kann das Verbindungsteil an das Kunststoffteil angeklebt, angeschweißt oder eingegossen sein, wobei zumindest Teile des Verbindungsteils über das Kunststoffteil hinausragen. Das Verbindungsteil, welches z.B. aus einem Kunststoffschaum, einem Zellulosepapier oder einem Faservlies besteht, verfügt über eine poröse Struktur. Diese poröse Struktur kann Löcher, Kanäle oder Zwischenräume aufweisen, in welche eine Vergussmasse eindringen kann. Hierbei kann die Vergussmasse vorzugsweise aus einem Polyurethan oder einem beliebigen Gießharz bestehen Die Vergussmasse kontaktiert einerseits das Kunststoffteil im Bereich des Verbindungsteils und andererseits das Filtermedium. Die Vergussmasse bildet so eine dichtende Verbindung zwischen dem Kunststoffteil und dem Filtermedium, wobei die Vergussmasse Teile, insbesondere Endscheiben eines Rundfilterelementes, bilden kann. Durch das Eindringen der Vergussmasse in das Verbindungsteil, ist nach dem Erstarren der Vergussmasse ein dauerhaft fester Verbund gebildet, welcher eine dichtende Verbindung zwischen dem Kunststoffteil und der Vergussmasse und somit mit dem Filtermedium bildet.

Erfindungsgemäß ist das Verbindungsteil ein Vliesteil, welches über einen Flauschbereich, welcher das Kunststoffteil überragt, und einen Verbindungsbereich, welcher mit dem Kunststoffteil fest verbunden ist, verfügt. Das Vliesteil ist vorzugsweise ein Kunststoffvlies, welches aus zahlreichen einzelnen Fasern besteht und so den Flauschbereich bildet. Der Verbindungsbereich kann z.B. aus verpressten Fasern, welche an das Kunststoffteil angeklebt oder angeschweißt sind gebildet sein. Weiterhin kann der Verbindungsbereich des Verbindungsteils auch in das Kunststoffteil hineinragen und so die unlösbare Verbindung bilden. Der Flauschbereich ist derart gestaltet, dass einerseits ausreichend Zwischenräume zwischen den Fasern vorhanden sind, in welche die Vergussmasse eindringen kann, und andererseits die Fasern selbst eine ausreichende Stabilität aufweise, wodurch ein Ablösen der Vergussmasse von dem Kunststoffteil verhindert wird.

Erfindungsgemäß besteht das Kunststoffteil aus einem thermoplastischen Kunststoff, wobei das Kunststoffteil im Spritzgussverfahren hergestellt ist. Das Verbindungsteil wird als vorgefertigtes Bauteil in die Spritzgussform des Kunststoffteils eingelegt und anschließend wird die Kunststoffschmelze in die Spritzgussform eingespritzt. Die Kunststoffschmelze dringt teilweise in das Verbindungsteil ein und bildet so eine unlösbare Verbindung. Bei anderen Varianten schmilzt das Verbindungsteil im Kontaktbereich mit der Schmelze auf und bildet so mit der erstarrten Kunststoffschmelze eine unlösbare Verbindung. Das Anspritzen des Kunststoffteils an das Verbindungsteil ist ein einfaches und kostengünstiges Verfahren.

Bei einer vorteilhaften Ausgestaltung ist das Kunststoffteil eine Kunststoffendscheibe eines Rundfilterelementes, wobei das Filtermedium ringförmig geschlossen ist. Unter " ringförmig geschlossen" im Sinne dieser Anmeldung ist neben dem kreisringförmigen Schließen des gefalteten Filtermediums auch ein beliebiges Bilden einer Hohlform, insbesondere oval oder polygon-förmig, zu verstehen. Die Kunststoffendscheibe ist auf der Stirnseite des Filtermediums angeordnet. Das Verbindungsteil ist in dem, dem Filtermedium zugewandten Bereich der Kunststoffendscheibe angeordnet. Das Verbindungsteil ist bei dieser Ausgestaltung ringförmig ausgebildet, wobei das Verbindungsteil sich über den gesamten Bereich der Kunststoffendscheibe erstreckt, welcher mit dem Filtermedium korrespondiert. Somit ist eine zuverlässig dichtende Verbindung zwischen dem Filtermedium und der Kunststoffendscheibe gewährleistet.

Bei einer alternativen Ausgestaltung ist das Kunststoffteil ein Stützrohr, welches in einem Rundfilterelement angeordnet ist. Das Stützrohr ist zur mechanischen Stabilisierung des Filtermediums vorgesehen und für das zu reinigende Fluid durchlässig ausgebildet. Bei einer Anordnung des Stützrohres in dem ringförmig geschlossenen Filtermedium wird dieses durch den Außenumfang des Stützrohres gestützt. Bei einer Anordnung, bei welcher das Stützrohr das Filtermedium umschließt, wird das Filtermedium durch die Innenfläche des Stützkörpers abgestützt. Das Stützrohr verfügt über Stirnseiten, welche mit Endscheiben korrespondieren. Hierbei können die Endscheiben aus einem beliebigen Material, wie z.B. Kunststoff, Metall, Kautschuk oder der Vergussmasse selbst, gebildet sein. Im Bereich der Stirnseiten ist das Verbindungsteil auf dem Stützrohr angeordnet. Hierbei kann das Verbindungsteil auf dem Außenumfang, der Innenfläche oder auf der stirnseitigen Ringfläche angeordnet sein. Durch das Aufbringen der Vergussmasse auf das Stützrohr ist ein unlösbarer dichtender Verbund zwischen der Vergussmasse und dem Stützrohr gebildet. Sofern die Endscheibe durch die Vergussmasse gebildet ist, besteht ein dichtender Verbund zwischen der Endscheibe, dem Stützrohr und dem Filtermedium, welches ebenfalls von der Vergussmasse umschlossen ist.

### Kurze Beschreibung der Zeichnungen

Weitere Einzelheiten der Erfindung werden nachfolgend anhand der schematischen Ausführungsbeispiele erläutert. Hierbei zeigt:
- Figur 1: ein Filterelement im Schnitt,
- Figur 2: eine Endscheibe im Schnitt,
- Figur 3: ein alternativ ausgestaltetes Filterelement im Schnitt,
- Figur 4: einen Ausschnitt eines Stützrohres im Schnitt,
- Figur 5: eine alternative Ausgestaltung des Stützrohres im Schnitt und
- Figur 6: eine weitere Alternative des Stützrohres im Schnitt.

### Ausführungsform(en) der Erfindung

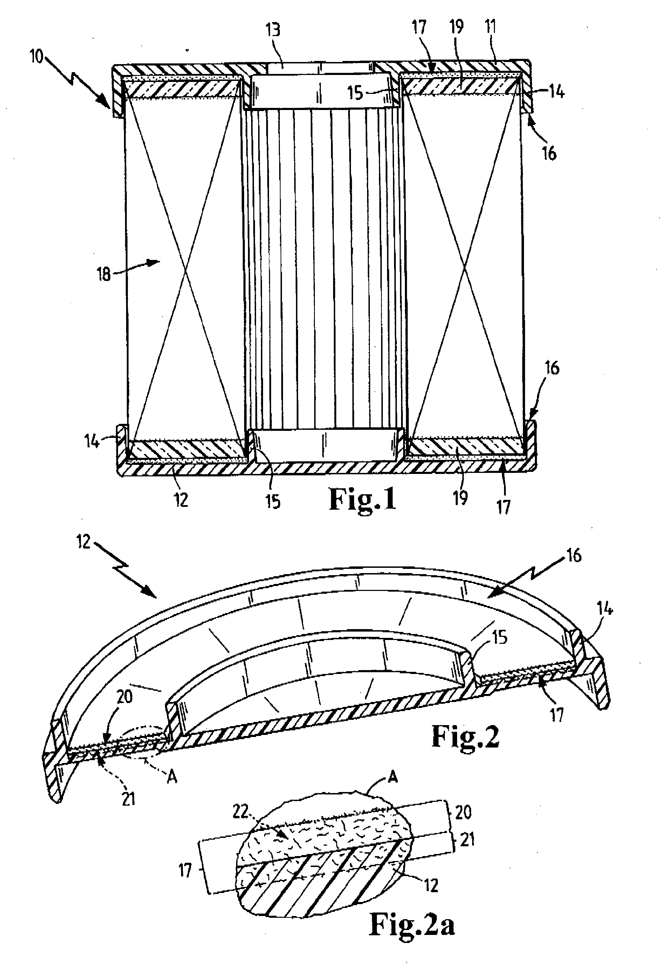

In Figur 1 ist ein Filterelement 10 im Schnitt dargestellt. Das Filterelement 10 verfügt über eine obere Endscheibe 11 und eine untere Endscheibe 12, wobei die Endscheiben 11, 12 aus Polyamid bestehen. Die obere Endscheibe 11 verfügt über eine Öffnung 13, durch welche das zu reinigende oder das bereits gereinigte Fluid hindurch strömen kann. Die untere Endscheibe 12 ist geschlossen ausgeführt. Beide Endscheiben 11, 12 verfügen über einen äußeren Gießrand 14 und einen inneren Gießrand 15. Die Gießränder 14, 15 bilden bei jeder Endscheibe 11, 12 eine ringförmige Gießschale 16. In jeder Gießschale 16 ist jeweils ein Vliesring 17 angeordnet, welcher unlösbar mit der jeweiligen Endscheibe 11, 12 verbunden ist. Zwischen den Endscheiben 11, 12 erstreckt sich ein gefaltetes, ringförmig geschlossenes Filtermedium 18. Das Filtermedium 18 ragt in die Gießschalen 16 der Endscheiben 11, 12 hinein. Zum Fixieren des Filtermediums 18 in den Gießschalen 16 der Endscheiben 11, 12 ist eine Vergussmasse 19 vorgesehen, welche einerseits das Filtermedium 18 stirnseitig umschließt und andererseits den Vliesring 17 durchsetzt. Somit ist ein unlösbarer, dichtender Verbund zwischen den Endscheiben 11, 12 und dem Filtermedium geschaffen, welcher auch durch äußere Einflüsse, wie Erschütterungen oder Temperaturschwankungen nicht gelöst werden kann.

In Figur 2 ist die untere Endscheibe 12 gemäß Figur 1 in perspektivischer Darstellung im Schnitt dargestellt, wobei ein Ausschnitt A in der Figur 2a vergrößert dargestellt ist. Der Figur 1 entsprechende Bauteile sind mit gleichen Bezugszeichen versehen. Der Vliesring 17 verfügt über einen Flauschbereich 20 und einen Verbindungsbereich 21. Der Flauschbereich 20 ragt von der Endscheibe 12 in die Gießschale 16 hinein. Hierbei wird der Flauschbereich 20 durch locker aneinander anliegende Fasern 22 gebildet. Der Verbindungsbereich 21 ist durch in den Kunststoff der Endscheibe 12 eingebettete Fasern 22 gebildet. Somit ist die Verbindung zwischen der Endscheibe 12 und dem Vliesring 17 unlösbar. Der Vliesring 17 und die obere Endscheibe 11 sind in gleicher Weise verbunden.

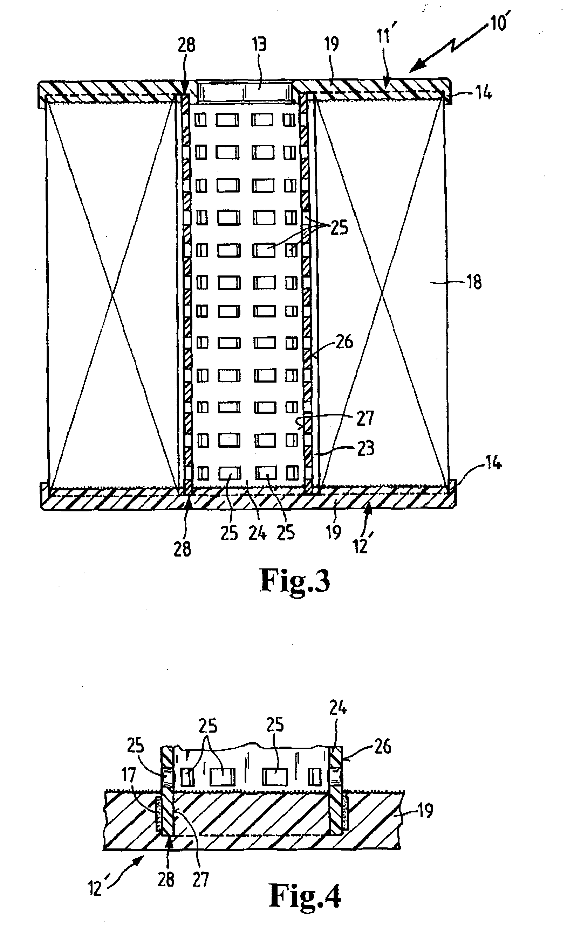

In Figur 3 ist ein alternativ ausgestaltetes Filterelement 10' im Schnitt dargestellt. Der Figur 1 entsprechende Bauteile sind mit gleichen Bezugszeichen versehen. Das Filterelement 10' verfügt über ein zick-zack-förmig gefaltetes und ringförmig geschlossenes Filtermedium 18, welches zwischen zwei Endscheiben 11' und 12' angeordnet ist. In dem, durch das Filtermedium 18 gebildeten Hohlraum 23 ist ein Stützrohr 24 angeordnet. Das Stützrohr 24 besteht aus Kunststoff und verfügt über Durchlässe 25, durch welche das Fluid hindurch strömen kann. Weiterhin verfügt das Stützrohr 24 über einen Außenumfang 26, eine Innenfläche 27 und Stirnseiten 28. Das Stützrohr 24 ist im Bereich der Stirnseiten 28 von der Vergussmasse 19 umschlossen. Bei diesem Ausführungsbeispiel sind die Endscheiben 11' und 12' durch die Vergussmasse 19 gebildet. Die geometrischen Außenabmessungen der Endscheiben 11' und 12' werden durch eine Werkzeugform (nicht dargestellt) gebildet, in welche die flüssige Vergussmasse 19 eingefüllt und nach dem Erstarren als Endscheibe entnommen wird. Zur Bildung einer unlösbaren Verbindung zwischen dem Stützrohr 24 und der Vergussmasse 19 ist ein Vliesring 17 gemäß einer anhand der Figuren 4 bis 6 beschrieben Ausführungen vorgesehen.

In Figur 4 ist ein Ausschnitt aus dem Filterelement 10' gemäß Figur 3 dargestellt. Der Figur 3 entsprechende Bauteile sind mit gleichen Bezugszeichen versehen. Der Vliesring 17 ist im Bereich der Stirnseite 28 am Außenumfang 26 angeordnet. Der Vliesring 17 ist, wie in Figur 2a beschrieben, mit dem Stützrohr 24 verbunden. Die Vergussmasse 19 umschließt den stirnseitigen Bereich des Stützrohres 24, wobei ebenfalls der Vliesring 17 umschlossen ist. Somit ist der Außenumfang des Stützkörpers 24 unlösbar mit der Vergussmasse 19 verbunden, wobei diese Verbindung dichtend ist.

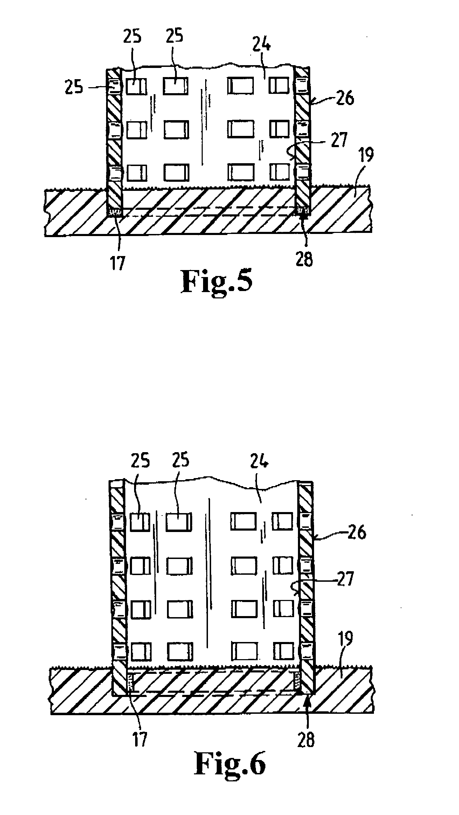

In Figur 5 ist eine Alternative zu der in Figur 4 dargestellten Lösung gezeigt. Gleiche Teile sind mit gleichen Bezugszeichen versehen. Bei dieser Alternative ist der Vliesring 17 auf die Stirnseite 28 des Stützrohres 24 aufgebracht. Hierbei entspricht die Verbindung des Vliesringes 17 mit dem Stützkörper 24ebenfalls der in Figur 2a beschriebenen Verbindung.

In Figur 6 ist eine weitere Alternative zu den in Figur 4 und 5 gezeigten Ausführung dargestellt. Gleiche Teile sind mit gleichen Bezugszeichen versehen. Bei diesem Ausführungsbeispiel ist der Vliesring 17 auf die Innenfläche 27 des Stützrohres 24 aufgebracht.

## Patentansprüche

1. Filterelement (10) aufweisend zumindest ein Kunststoffteil (11, 12, 24), ein Filtermedium (18) und eine Vergussmasse (19), wobei die Vergussmasse (19) zur Bildung einer Verbindung zwischen dem Kunststoffteil(11, 12, 24) und dem Filtermedium (18) vorgesehen ist, wobei ein Verbindungsteil vorgesehen ist, welches fest mit dem Kunststoffteil (11, 12, 24) verbunden ist **dadurch gekennzeichnet, dass** das Verbindungsteil ein Vliesteil (17) ist, welches über einen Flauschbereich (20) und einen Verbindungsbereich (21) verfügt und die Vergussmasse (19) zumindest teilweise in das Vliesteil (17) eindringt und das Kunststoffteil (11, 12, 24) im Spritzgussverfahren hergestellt ist, wobei das Kunststoffteil (11, 12, 24) an das Verbindungsteil angespritzt ist.

2. Filterelement nach Anspruch 1, **dadurch gekennzeichnet, dass** das Kunststoffteil (11, 12, 24) eine Endscheibe (11), (12) ist und das Verbindungsteil im Kontaktbereich zu dem Filtermedium (18) angeordnet ist.

3. Filterelement nach Anspruch 1, **dadurch gekennzeichnet, dass** das Kunststoffteil (11, 12, 24) ein Stützrohr (24) mit einem Außenumfang (26) und zwei Stirnseiten (28) ist, wobei das Verbindungsteil im Bereich der Stirnseiten (28) angeordnet ist.

## Claims

1. Filter element (10) featuring at least one plastic part (11, 12, 24), one filter medium (18) and one casting compound (19), the casting compound (19) being provided for forming a connection between the plastic part (11, 12, 24) and the filter medium (18), a connection component being provided which is firmly connected with the plastic part (11, 12, 24), **characterized in that** the connection component is a non-woven part (17) which has a fleece section (20) and a connecting area (21) and that the casting compound (19) penetrates at least partially into the non-woven part (17) and that the plastic part (11, 12, 24) is manufactured by injection molding, the plastic part (11, 12, 24) being injection-molded to the connection component.

2. Filter element according to claim 1, **characterized in that** the plastic part (11, 12, 24) is an end plate (11), (12) and that the connection component is disposed in the contact area with the filter medium (18).

3. Filter element according to claim 1, **characterized in that** the plastic part (11, 12, 24) is a support tube (24) with an external circumference (26) and two front sides (28), the connection component being disposed in the area of the front sides (28).

## Revendications

1. Elément filtrant (10) présentant au moins une pièce en matière plastique (11, 12, 24), un milieu filtrant (18) et une masse de scellement (19), la masse de scellement (19) étant destinée à former un assemblage entre la pièce en matière plastique (11, 12, 24) et le milieu filtrant (18), une pièce de jonction reliée de manière fixe à la pièce en matière plastique (11, 12, 24) étant prévue, **caractérisé en ce que** la pièce de jonction est une pièce en non-tissé (17) qui dispose d'une zone en velours (20) et d'une zone de jonction (21), que la masse de coulage (19) pénètre, au moins partiellement, dans la pièce en non-tissé (17) et que la pièce en matière plastique (11, 12, 24) est fabriquée selon un procédé de moulage par injection, la pièce en matière plastique (11, 12, 24) étant appliquée par injection sur la pièce de jonction.

2. Elément filtrant selon la revendication 1, **caractérisé en ce que** la pièce en matière plastique (11, 12, 24) est une plaque d'extrémité (11 ), (12) et que la pièce de jonction est disposée dans la zone de contact avec le milieu filtrant (18).

3. Elément filtrant selon la revendication 1, **caractérisé en ce que** la pièce en matière plastique (11, 12, 24) est un tube de support (24) avec un pourtour extérieur (26) et deux faces frontales (28), la pièce de jonction étant disposée dans la zone des faces frontales (28).
